# DEMANDE DE BREVET EUROPEEN

(11) **EP 0 871 153 A1**
(43) Date de publication de la demande: **14.10.1998**
(21) Numéro de dépôt: 98420061.8
(22) Date de dépôt: 09.04.1998
(51) Int. Cl.: G09F 3/02, A01J 27/00

(54) **Plaque support d'information pour un produit alimentaire solide notamment un fromage**

(30) Priorité: 09.04.1997 FR 9704560
(71) Demandeur: Matec, 39240 Arinthod (FR)
(72) Inventeur: Rognard, Sébastien, 01580 Matafelon (FR)
(74) Mandataire: Bratel, Gérard

(57) **Abrégé**

Cette plaque (1) support d'information pour un article (2) d'un produit alimentaire solide, comprend une feuille (3) d'un substrat alimentaire, adaptée pour être apposée à la surface (2a) dudit article, directement au contact dudit produit alimentaire, et une autre feuille (4) fixée par l'une de ses faces (4a) sur un côté de ladite feuille, et dont l'autre face (4b) est affectée au support de ladite information, par exemple un marquage.

Selon l'invention, ladite autre feuille (4) est constituée par un papier, et ladite autre face (4b) est enduite avec une couche sensiblement continue d'une matière minérale alimentaire, servant au support de ladite information.

## Description

La présente invention concerne une plaque adaptée au support d'une information ou d'informations, ou supportant ladite information, destinée à être apposée à la surface d'un article d'un produit alimentaire solide, directement au contact de ce dernier.

Par "information", on entend toute information à caractère technique, pratique, ou de fantaisie pouvant être matérialisée sous la forme d'un marquage rapporté ou apposé sur toute surface formant support d'information par toutes techniques appropriées, ledit marquage pouvant être à son tour lu à l'oeil nu, ou avec tout instrument ou outil de lecture approprié, en fonction notamment de la nature ou de la technique du marquage.

Répondent à la définition précédente, toutes informations de type alphabétique, numérique, alpha-numérique, codées ou non (codes à barres, par exemple), ainsi que toutes informations d'identification ou caractérisation, notamment marques verbales et/ou figuratives (logotypes), appellations d'origine, ou autres désignations, notamment de type réglementaire, publicitaire ou promotionnel.

Les marquages considérés peuvent être de nature traditionnelle, et sont par exemple obtenus par les techniques usuelles d'impression (offset, ou autres), ou par d'autres procédés d'impression, tels que par transfert thermique. Ce marquage peut également être de type magnétique ou autre, dès lors que l'oeil nu et/ou l'instrument de lecture utilisé sont adaptés à sa lecture, en fonction de la technique de marquage retenue.

Ces différents marquages permettent en particulier le suivi du ou des articles du produit alimentaire, à des fins de gestion de stock ou de qualité (traçabilité, par exemple).

Par "produit alimentaire solide", on entend tout aliment ayant une consistance essentiellement solide, ou susceptible d'acquérir au cours du temps cette consistance solide. Préférentiellement mais non exclusivement, le produit alimentaire considéré est un aliment susceptible de fermenter, ou ayant fermenté sous l'action de micro-organismes (notamment levures, ou bactéries) incorporés dans sa masse lors de sa fabrication, et/ou apportés par l'atmosphère ambiante. Par exemple, répondent à la définition précédente des fromages ou autres produits fromagers susceptibles de fermenter lors de leur fabrication, et en particulier lors de leur affinage ; mais aussi des produits de charcuterie ou de salaison, par exemple des jambons.

Conformément au document FR-A-2 694 113, on a déjà décrit et proposé une plaque de support d'information, pour un article d'un produit alimentaire solide, du type fromage, comprenant une feuille d'un substrat alimentaire, adaptée pour être encastrée dans ledit produit alimentaire, au niveau de la surface apparente de l'article sur lequel est apposée la plaque, en laissant apparaître pour une majeure partie la face externe de ladite feuille, affectée au support de l'information. Le substrat alimentaire est constitué par un matériau protidique, notamment de la caséine, dans lequel est incorporé un agent antifongique et/ou anti-bactérien.

Dans le cas d'un fromage, par exemple à pâte pressée et cuite, la plaque précédemment définie est incorporée dans une partie superficielle apparente du fromage en cours de fabrication, encore relativement mou, en particulier avant son affinage. De cette manière la plaque se trouve retenue dans le fromage, au niveau de sa surface, puis se trouve prise dans la masse du même fromage, une fois ce dernier fermenté et donc durci, de telle sorte que ladite plaque demeure définitivement fixée au fromage.

En pratique, lorsque le marquage intervient avant l'apposition de la plaque, le processus fermentaire est susceptible de se développer en partie sur la surface apparente de la plaque, masquant ainsi pour partie l'information marquée, par des moisissures par exemple. Dans ces conditions, la lecture de l'information marquée peut être gênée ou contrariée, voire impossible.

La présente invention a donc pour objet une plaque support d'information préservant la lisibilité du marquage informatif, dans le cas où, d'une part ce dernier est reproduit sur la plaque avant son apposition sur l'article du produit alimentaire, et d'autre part la même plaque ainsi marquée est apposée sur le même article au cours de son processus de fabrication, mettant en oeuvre une ou plusieurs fermentations.

De plus, l'invention a pour objet une plaque n'altérant pas le processus de fermentation du produit alimentaire sur lequel elle est apposée, et demeurant de qualité complètement alimentaire.

Conformément à la présente invention, une autre feuille, constituée par un papier, est fixée par l'une de ses faces sur un côté de la feuille du substrat alimentaire, c'est-à-dire sur le côté de ladite feuille, opposé à la surface de l'article du produit alimentaire solide, dans la position apposée sur ce dernier de la plaque conforme à l'invention. Et l'autre face de cette même autre feuille en papier, c'est-à-dire la face apparente lorsque la plaque conforme à l'invention est apposée sur le produit alimentaire solide, est enduite avec une couche sensiblement continue d'une matière minérale alimentaire, servant au support de cette information.

Préférentiellement, l'autre feuille est un papier couché.

Grâce à l'invention, on obtient en particulier une plaque support d'information totalement biodégradable.

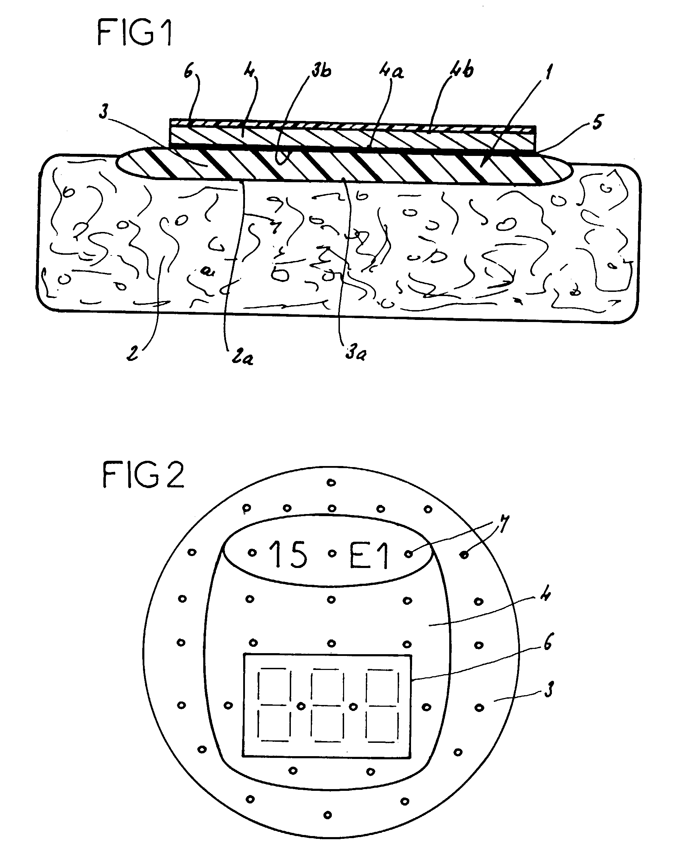

La présente invention est maintenant décrite par rapport aux dessins annexés, dans lesquels la figure 1 représente de manière schématique, vue en coupe, une plaque support d'information conforme à l'invention, apposée sur un article d'un produit alimentaire solide, et la figure 2 représente une vue de dessus d'une plaque support d'information perforée.

Conformément à la figure 1, l'article 2 du produit alimentaire solide consiste en un fromage en cours de fermentation et/ou d'affinage. La plaque support d'information 1 comprend, dans sa position apposée sur ledit produit alimentaire, de l'intérieur (à coeur) vers l'extérieur de l'article 2 :
- une feuille 3 d'un substrat alimentaire, notamment d'un matériau protidique, par exemple de la caséine ; cette feuille 3 est adaptée au produit alimentaire pour être encastrée dans l'article 2, au niveau de sa surface apparente, directement au contact du produit alimentaire ; cette feuille 3 comprend une face intérieure 3a directement au contact de l'empreinte 2a formée dans le produit alimentaire relativement mou, par l'insertion de ladite feuille 3, ainsi qu'une face extérieure opposée 3b, dont il sera question ci-après,
- une autre feuille 4, en papier couché, fixée par sa face intérieure 4a sur le côté ou face 3b de la feuille 3, par un collage au moyen d'une colle alimentaire 5 ; la face externe 4b de l'autre feuille 4, opposée à la face 4a, est affectée au support de l'information, et est recouverte en partie par un marquage approprié (non représenté) ; la face 4b de l'autre feuille 4 en papier est donc enduite avec une fine couche, sensiblement continue, d'une matière minérale alimentaire, par exemple du kaolin, servant au support de l'information, sous la forme d'un marquage,
- une couche de protection transparente 6, sous la forme d'un vernis ou d'une pellicule, toujours de qualité alimentaire, revêtissant la face externe 4b de l'autre feuille 4 en papier, par un collage au moyen d'une colle de qualité alimentaire.

Par "alimentaire" ou "qualité alimentaire", on entend la propriété selon laquelle le matériau ou constituant considéré peut être en contact direct ou indirect avec un aliment sans risque particulier pour le consommateur final, par exemple conformément à la norme allemande BGVV et à la réglementation américaine FDA.

Les feuilles 3 du substrat alimentaire peuvent être obtenues, à titre d'exemple, comme décrit dans le document FR-A-2 694 113, précédemment cité.

Par ailleurs, les plaques composites 1 conformes à la présente invention peuvent être en partie perforées.

Conformément à la figure 2, la plaque support d'information selon l'invention présente des perforations 7 sur toute sa surface de part et d'autre de sa structure.

Il est particulièrement avantageux de déposer la plaque support d'information perforée sur le substrat alimentaire avant le pressage. En effet, les perforations améliorent le maintien de la plaque support d'information dans la mesure où le produit fermenté du substrat alimentaire se développe au niveau des perforations, sans pour autant recouvrir ladite plaque et cacher l'information.

Il sera donc possible de perforer la plaque à différents endroits, et la figure 2 n'est qu'un exemple d'un tel mode de réalisation de l'invention.

## Revendications

1. Plaque (1) support d'information pour un article (2) d'un produit alimentaire solide, comprenant une feuille (3) d'un substrat alimentaire, adaptée pour être apposée à la surface (2a) dudit article, directement au contact dudit produit alimentaire, et une autre feuille (4) fixée par l'une de ses faces (4a) sur un côté de ladite feuille, et dont l'autre face (4b) est affectée au support de ladite information, par exemple un marquage, **caractérisée en ce que** ladite autre feuille (4) est constituée par un papier, et ladite autre face (4b) de ladite autre feuille est enduite avec une couche sensiblement continue d'une matière minérale alimentaire, servant au support de ladite information.

2. Plaque selon la revendication 1, caractérisée en ce que le papier est un papier couché.

3. Plaque selon la revendication 1, caractérisée en ce que le produit alimentaire est un aliment susceptible de fermenter sous l'action de micro-organismes, incorporés dans sa masse lors de sa fabrication, et/ou apportés par l'atmosphère ambiante.

4. Plaque selon la revendication 1, caractérisée en ce que le substrat alimentaire de la feuille (3) est constitué par au moins un matériau protidique, notamment de la caséine.

5. Plaque selon la revendication 1, caractérisée en ce que ladite autre feuille en papier (4) est collée sur ladite feuille (3), notamment par une colle alimentaire (5).

6. Plaque selon la revendication 1, caractérisée en ce que l'autre face (4b) de l'autre feuille (4) en papier est revêtue par une couche (6) de protection transparente.

7. Plaque selon la revendication 1, caractérisée en ce que la feuille (3) du substrat alimentaire est adaptée pour être encastrée dans le produit alimentaire, au niveau de la surface apparente de l'article (2), en laissant apparaître pour une majeure partie l'autre face (4b) de l'autre feuille (4) en papier.

8. Plaque selon l'une quelconque des revendications précédentes, caractérisée en ce qu'elle présente des perforations (7) de part et d'autre de sa structure.
